# EUROPEAN PATENT APPLICATION

(11) **EP 1 612 433 A1**
(43) Date of publication of application: **04.01.2006**
(21) Application number: 05105721.4
(22) Date of filing: 27.06.2005
(51) Int. Cl.: F16B 12/50

(54) **Connection joint for a frame of an item of furniture**

(30) Priority: 30.06.2004 IT UD20040027 U
(71) Applicant: STEELFORM Srl, 33050 RIVIGNANO (UD) (IT)
(72) Inventor: Odorico, Marco, 33050, RIVIGNANO (UD) (IT); Odorico, Angelo, 33050, RIVIGNANO (UD) (IT)
(74) Representative: Petraz, Davide Luigi

(57) **Abstract**

Connection joint for connecting together two or more tubular elements (11, 12) of the frame of an item of furniture. The connection joint is made with an open tubular element (14) and has two faces (15, 16) on the edges of which two fins (21) are made in a single piece and are inserted into mating apertures (23) made on the tubular elements (11, 12). Each fin (21) comprises at least a hole (22); through the holes and through eyelets (24) made on the tubular elements (11, 12), nails (25) or screws (27) are inserted under pressure so as to attach through interference the fins (21), and hence the connection joint, to the tubular elements (11, 12).

## Description

### FIELD OF THE INVENTION

The present invention concerns a connection joint for the frame of items of furniture, both of the domestic type and of industrial type, such as for example tables, benches, desks, shelves, bearing structures or suchlike. The joint allows to connect, simply and effectively, two or more tubular elements forming said frame, allowing to obtain an item of furniture that is very solid and stable over time.

### BACKGROUND OF THE INVENTION

A connection joint is known, which is used to connect together two or more tubular elements of the frame of an item of furniture.

Said joint can be made, for example, by shaping a metal plate in the shape of an open tubular element, so as to confer on two parallel surfaces thereof an identical trapezoid shape.

The oblique sides of the parallel trapezoid surfaces are convergent with respect to each other and on the outer edge thereof some teeth are made, in a single piece, shaped so as to enter into mating apertures made near the ends of two tubular elements, in order to attach the latter to each other by means of the joint.

The two tubular elements attached to the joint thus lie on the same plane and are angled with respect to each other, normally by 90°.

Between the ends of the two tubular elements a space is formed in which a third tubular element is positioned, lying on a plane orthogonal to that of the previous ones and attached to the joint by means of screws, in order to normally perform the function of a leg for the frame.

Said joint has the disadvantage that it has teeth that need to have a very precise shape, to guarantee that the attachment is stable and that, over time, it is not compromised by stresses and vibrations.

This entails the need to have to effect a suitable processing in order to confer the desired shape on the teeth, with a consequent increase in times and costs to make the joint, and also possible difficulties in assembly.

Another disadvantage of the conventional joint is that it does not allow a stable connection between the two tubular elements, lying on the same plane, if the third tubular element is not also associated with them, orthogonal to the first two and functioning as a leg. This entails the substantial impossibility of providing the user with parts of the frame already assembled.

One purpose of the present invention is to achieve a connection joint which allows a simple and effective connection between the tubular elements that form the frame of an item of furniture, limiting the working required, and hence the costs, to achieve the connection joint itself.

Another purpose of the present invention is to achieve a connection joint by means of which the two coplanar tubular elements are attached to each other stably, without needing to attach the orthogonal tubular element too, and thus provide the final user with an at least partly pre-assembled frame.

The Applicant has devised, tested and embodied the present invention to overcome the shortcomings of the state of the art and to obtain other advantages.

### SUMMARY OF THE INVENTION

The present invention is set forth and characterized essentially in the main claim, while the dependent claims describe other innovative characteristics of the invention.

In accordance with these purposes, a connection joint for a modular frame of an item of furniture, both of domestic or industrial type, is able to connect together at least two tubular elements of said frame and is made by an open tubular element having an upper wall or face, and a lower wall or face that define at the sides two joining surfaces, forming between them a determinate angle, normally of 90°. On these surfaces a plurality of fins are made in a single piece, protruding from the shape of the upper and lower walls and able to be inserted into mating apertures made on the tubular elements.

According to a characteristic of the present invention, at least a hole is made on every fin.

According to another characteristic of the present invention, attachment means are able to be inserted under pressure through said holes on the fins and through mating eyelets made on the tubular elements and with respect to which said holes are aligned. The attachment means thus make solid, through interference, the fins of the joint with the tubular elements, achieving the reciprocal clamping of the latter by means of the joint itself.

According to a preferential embodiment, the attachment means comprise nails, or pins, while according to a variant the attachment means comprise self-tapping screws.

According to the invention, the connection joint comprises a wall, at the rear in use, able to connect orthogonally the upper and lower walls. On the rear wall at least a hole is made, able to allow the passage of a screw, so as to attach, by means of the connection joint, a third tubular element of the frame, orthogonal to the first two and normally functioning as a leg.

According to another variant, at least in the case when it is made by means of laser cutting, the connection joint can also have a connection wall, that is at the front during use, opposite the rear one, with the function of increasing the rigidity of the joint. In the preferential embodiment, the front wall has an eyelet able to allow the passage of the screw necessary for the attachment of the third tubular element.

The connection joint according to the present invention allows to join together, simply and effectively, three tubular elements which are part of a frame of an item of furniture, without needing complex additional workings to shape the fins, which have a linear and square shape that can be obtained easily and quickly.

The connection joint according to the invention can be made, in a first embodiment, starting from a steel tube, for example stainless steel, by means of a cutting process, advantageously laser cutting,

In another form of embodiment, the joint according to the invention is obtained from an alloy, for example aluminum, by means of a process of extrusion and subsequent cutting to size.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is an exploded view of an embodiment of the connection joint according to the present invention;
- fig. 2 is a three-dimensional view of the connection joint in fig. 1;
- fig. 3 is another three-dimensional view of the connection joint in fig. 1;
- fig. 4 is a sectioned view of a detail of fig. 1;
- fig. 5 is a sectioned view of a variant of fig. 2.

### DETAILED DESCRIPTION OF A PREFERENTIAL FORM OF EMBODIMENT

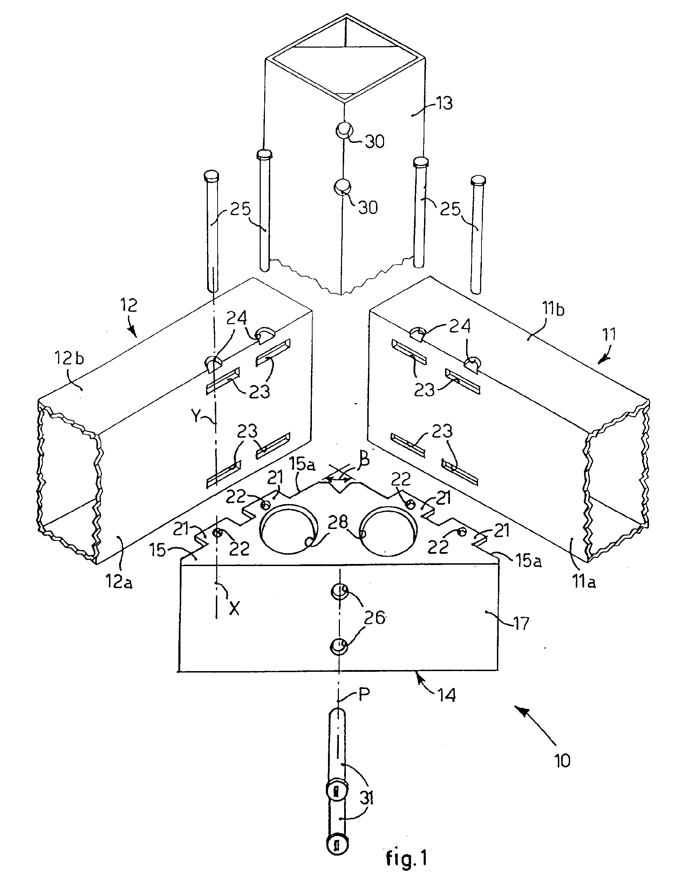

With reference to fig. 1, a connection joint 10 according to the present invention is used to connect three tubular elements, respectively first element 11, second element 12 and third element 13, forming part of the frame of an item of furniture, both of domestic or industrial type.

Normally, the first tubular element 11 and the second tubular element 12 are co-planar and constitute the cross-pieces that support the supporting plane of the item of furniture, while the third tubular element 13 develops orthogonal to the others and constitutes the leg of the frame.

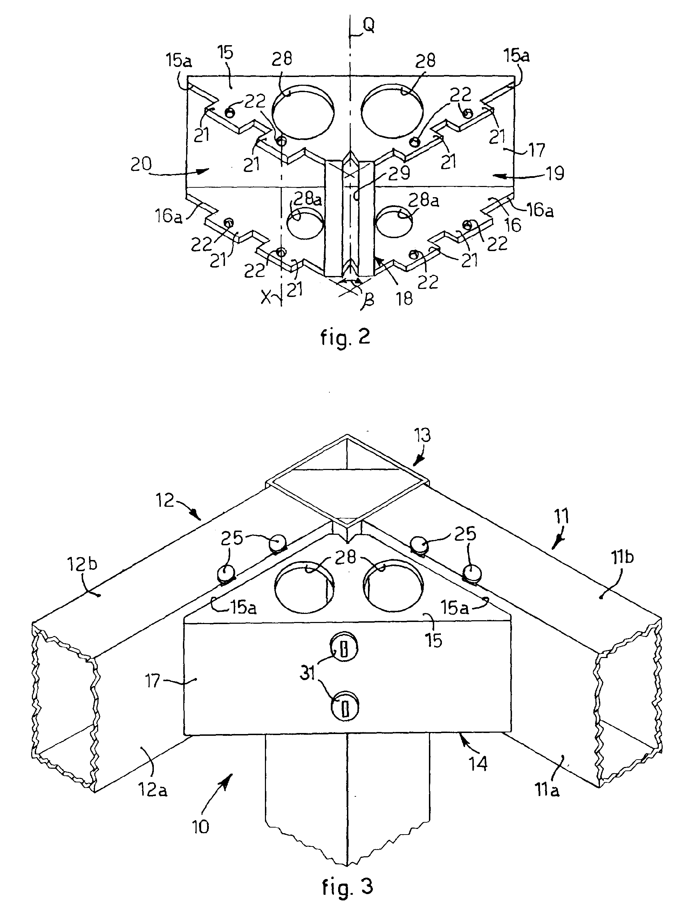

The connection joint 10 (figs. 1 and 2) comprises an open tubular element 14 which consists of two walls or faces, parallel to each other, respectively upper face 15 and lower face 16, having the same trapezoid shape and including respectively holes 28 and 28a. The function of the latter is to allow a supporting plane to be attached on the frame, and they have variable shape and size (fig. 2 shows as an example two different sizes of the holes) in relation to specific requirements.

The upper face 15 and the lower face 16 are joined to each other at the rear by means of a plane rear wall 17, orthogonal to them, while they are joined at the front, in the case shown, by means of a front wall 18, substantially parallel to the first wall 17. The front wall may not be present, particularly when the piece is made by molding.

The upper face 15 and lower face 16 and the front wall 18 and rear wall 17 define, at the sides, two open connection surfaces, respectively first join surface 19 and second join surface 20, forming between them an angle β.

The rear wall 17 has two holes 26, the centers of which are disposed along a symmetry axis P of the joint 10.

The front wall 18 has an eyelet 29, disposed in correspondence with the holes 26.

On each of the oblique sides 15a and 16a of the upper face 15 and lower face 16 of the joint 10 two fins 21 are made, lying substantially on the same plane as the relative faces 15 and 16.

Each fin 21 has a linear and square shape, in this case rectangular; substantially on its center a through hole 22 is made, with an axis X so that the holes 22 of the fins 21 of the upper face 15 are aligned with the holes 22 of the fins 21 of the lower face 16.

Each of the tubular elements 11 and 12, during use, has a vertical face 11a and 12a and, during use, a horizontal face 11b and 12b.

Slits 23 are made on each vertical face 11a and 12a; the number and position thereof mate with the fins 21 present on the joint 10.

On each edge between the faces 11b and 12b and the faces 11a and 12a two through eyelets 24 are made, with an axis Y.

The tubular elements 11 and 12 are attached by means of the connection joint 10 as follows (figs. 3, 4 and 5). The fins 21 of the joint 10 are inserted easily, exploiting the linear shape, into the respective slits 23 of the tubular elements 11 and 12, so as to align the axes X of the holes 22 with the axes Y of the eyelets 24.

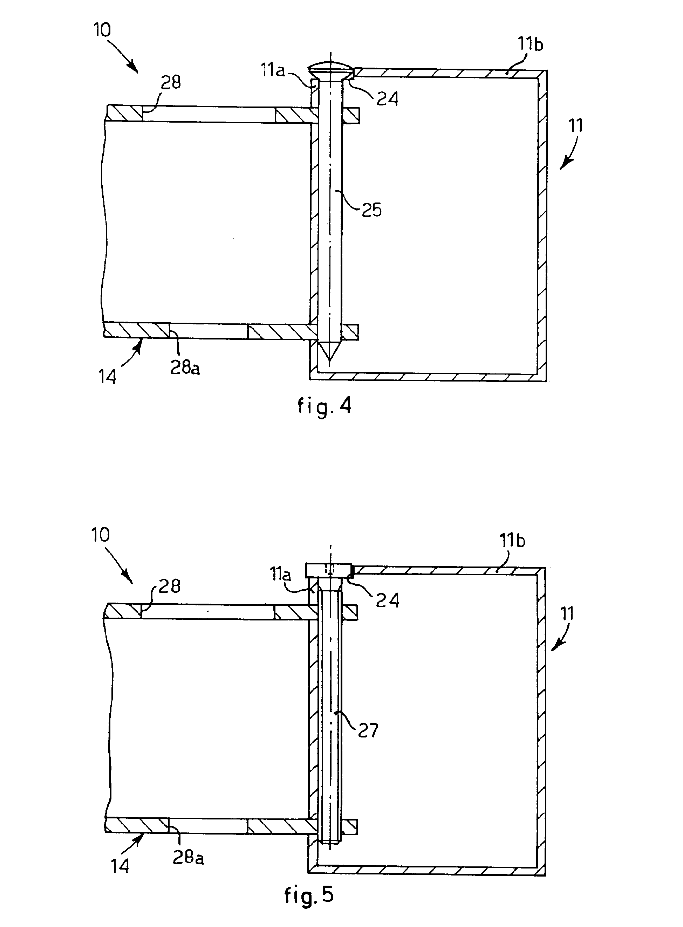

At this point, (figs. 1 and 4), a nail 25, or a pin, is inserted under pressure through every eyelet 24 of the tubular elements 11 and 12 and the relative holes of the fins 21. In this way, since the nail 25 engages on the metal material of the tubular element adjacent to the eyelet 24, a join is achieved due to the interference between each of the tubular elements 11 and 12 and the join 10, and hence a reciprocal join of the tubular elements 11 and 12 themselves.

The nails 25, in the variant shown in fig. 5, can be replaced by self-tapping screws 27, so as to guarantee a greater hold to the combination of the connection joint 10 and the tubular elements 11 and 12.

In the space that forms between the ends of the two tubular elements 11 and 12, the third tubular element 13 is inserted, which is disposed orthogonal with respect to the latter and acts as a leg.

The third tubular element 13 comprises two through holes 30, able to be aligned with the two through holes 26 made on the first rear wall 17 and the eyelet 29 made on the second front wall 18 of the connection joint 10.

The third tubular element 13 is attached to said connection joint 10 by means of two screws 31, or bolts, passing through both the holes 30 and 26 and the eyelet 29, to which relative sleeve nuts are screwed, present inside the tubular element 13 and not shown here.

The traction exerted when the screws 31 are screwed takes the third tubular element 13 against the angle formed by the first two tubular elements 11 and 12, making the reciprocal clamping even more stable.

It is clear that modifications and/or additions of parts may be made to the connection joint 10 as described heretofore, without departing from the field and scope of the present invention.

According to a variant, not shown in the drawings, the fins 21 have the ends bevelled, so as to facilitate their insertion through the slits 23. Moreover, at least the fins 21 relating to the lower face 16 of the connection joint 10 can have an eyelet instead of the hole 22, so as to facilitate the passage of the nail 25, the pin, or the self-tapping screw 27, without requiring an extremely precise alignment.

According to another variant, not shown in the drawings, the tubular elements 11 and 12 have their reciprocally converging edges shaped so as to create, once they are joined to the connection joint 10, a partly circular seating with which a tubular element having a cylindrical section can easily be coupled, with the function of a leg for the frame.

According to another variant, not shown in the drawings, in the event that the tubular elements of the frame have a C-shaped cross section, open towards the inside, two connection joints 10 can be provided, one cooperating with the upper edge and one with the lower edge of the C-shaped section.

As said above, the connection joint 10 can be obtained from a steel tube cut by laser, or from aluminium extruded in bars and subsequently cut to size.

It is also clear that, although the present invention has been described with reference to some specific examples, a person of skill in the art shall certainly be able to achieve many other equivalent forms of connection joint for a modular frame of an item of furniture, having the characteristics as set forth in the claims and hence all coming within the field of protection defined thereby.

## Claims

1. Connection joint for a modular frame of an item of furniture, able to connect together at least two tubular elements (11, 12) of said frame, and made with an open tubular element (14) including at least two opposite faces (15, 16) defining two joining surfaces (19, 20) forming between them a determinate angle (β), on the edges of said faces (15, 16) a plurality of fins (21) being made in a single piece, able to be inserted into mating apertures (23) made on said tubular elements (11, 12), **characterized in that** each of said fins (21) comprises at least a through hole (22) and **in that** attachment means (25, 27) are able to be inserted under pressure through said holes (22) and through eyelets (24) made on said tubular elements (11, 12), and to which said holes (22) are able to be aligned, attaching, through interference, said fins (21) and hence said connection joint (10), to said tubular elements (11, 12).

2. Connection joint as in claim 1, **characterized in that** said fins (21) have a linear and square shape and protrude from the shape of said faces (15, 16), lying substantially on the same plane as said faces (15, 16).

3. Connection joint as in any claim hereinbefore, **characterized in that** said two faces (15, 16) have a substantially trapezoid shape and are joined together by at least a wall, during use, rear (17).

4. Connection joint as in any claim from 1 to 3, **characterized in that** said attachment means comprise nails (25) or pins.

5. Connection joint as in any claim from 1 to 3, **characterized in that** said attachment means comprise self-tapping screws (27).

6. Connection joint as in claim 3, **characterized in that** on said rear wall (17) at least a hole (26) is made, able to allow the passage of a screw (31) to attach a third tubular element (13) of said frame to said connection joint (10).

7. Connection joint as in any claim hereinbefore, **characterized in that** it comprises holes (28, 28a) at least on said faces (15, 16) able to allow a supporting plane to be attached to said frame.

8. Connection joint as in any claim hereinbefore, **characterized in that** it is obtained from a steel tube.

9. Connection joint as in any claim from 1 to 7, **characterized in that** it is obtained from an alloy by means of a process of extrusion.

10. Connection joint as in claim 9, **characterized in that** said alloy is aluminum.
